# EUROPÄISCHE PATENTANMELDUNG

(11) **EP 0 757 142 A1**
(43) Veröffentlichungstag der Anmeldung: **05.02.1997**
(21) Anmeldenummer: 96112099.5
(22) Anmeldetag: 26.07.1996
(51) Int. Cl.: E04G 15/00, E04G 15/06

(54) **Vorrichtung zur Herstellung von Installationsdurchbrüchen**

(30) Priorität: 03.08.1995 DE 19528685
(71) Anmelder: Saurwein, Berndt, 64711 Erbach (DE)
(72) Erfinder: Saurwein, Berndt, 64711 Erbach (DE)
(74) Vertreter: Weingart, Günter

(57) **Zusammenfassung**

Die Erfindung betrifft eine Vorrichtung 15 zur Erstellung von Installationsdurchbrüchen für Betondecken und/oder Betonwände zur Aufnahme von Versorgungsleitungen oder dergleichen. Die Vorrichtung 15 besteht aus einem verlorenen Schalungselement, welches aus mindestens einem mit den außenliegenden Betonflächen bündig abschließenden Grundkörper 1 und hierzu senkrecht innerhalb des Betons angeordneten Rohrelementen 17 besteht. Um eine Montagevereinfachung zu ermöglichen und ein späteres Verschließen der vorhandenen Durchbrüche zu vermeiden wird erfindungsgemäß vorgeschlagen, daß mindestens zwei Grundkörper 1 einander gegenüberliegend angeordnet sind und auf der nach innen weisenden Fläche jeweils mindestens einen, vorzugsweise mehrere, einstückig angeformte rohrförmige Stutzen 3 aufweist, welche jeweils paarweise gegenüberliegend angeordnet und durch jeweils ein Rohrelement 17 miteinander verbunden sind.

## Beschreibung

Die Erfindung betrifft eine Vorrichtung zur Herstellung von Installationsdurchbrüchen für Betondecken und/oder - wände zur Aufnahme von Versorgungsleitungen oder dergleichen, bestehend aus einem verlorenen Schalungselement, welches aus mindestens einem mit den außenliegenden Betonflächen bündig abschließenden Grundkörper und hierzu senkrecht innerhalb des Betons angeordneten Rohrelementen besteht.

Um die spätere Installation der Haustechnik in einem Neubau zu ermöglichen, werden in Wänden und Decken in der Rohbauphase Durchbrüche offen gelassen, durch die hindurch die Installationsleitungen verlegt werden können. Sofern die Wände aus Steinen gemauert werden, besteht die Möglichkeit einen einzelnen Stein fehlen zu lassen, um den entsprechenden Durchbruch zu schaffen. Bei Betondecken und/oder Betonwänden werden vielfach Styroporblöcke oder speziell angefertigte Schalungsteile, beispielsweise bei Filigrandecken, eingesetzt, welche entsprechend der Wand- bzw. Deckendicke gefertigt und an entsprechender Stelle auf der Schalung befestigt werden. Nach dem Aushärten des Betons und der Entfernung der Schalungsteile müssen die Styroporblöcke bzw. sonstigen Schalungsteile mühevoll in kostenintensiver Handarbeit entfernt werden. Nach Verlegung der Installationsleitungen ist es später erforderlich, die vorhandenen Durchbrüche zu verschließen, um mögliche Schallprobleme, beispielsweise in einem Mehrfamilienhaus, auszuschließen. Zum Verschließen der Durchbrüche, insbesondere der Deckendurchbrüche, sind mehrere Arbeitsschritte notwendig, zuerst muß eine einzelne auf den jeweiligen Durchbruch zugeschnittene Schalung unter Berücksichtigung der verlegten Hausanschlüsse angefertigt werden, um ein anschließendes Verfüllen des Deckendurchbruches zu ermöglichen. Nach dem Aushärten ist eine Entfernung der Schalung notwendig, so daß das Verschließen der Durchbrüche viel Zeit benötigt und darüber hinaus mit zusätzlichen Kosten verbunden ist. Ferner ist dieses Verfahren qualitativ unzureichend, da die Füllmasse der nachträglich geschlossenen Durchbrüche mit der Betonwand oder -decke keine einheitliche homogene Struktur bildet.

Aus der DE-PS 33 41 728 ist eine Vorrichtung zur Herstellung verschließbarer einzelner Installationsdurchbrüche bekannt, welche als Kernteil ein Rohrelement aus mindestens zwei teleskopierend zugeordneten Teilelementen aufweist. Die Teilelemente werden über Rastelemente entsprechend der Betondicke gehalten und auf der Schalung befestigt. Die vorgenannte Vorrichtung wird als verlorene Schalung innerhalb der Betondecke oder Betonwand zurückgelassen, so daß ein nachträgliches Entfernen nicht notwendig ist. Zum späteren Verschließen der Durchbrüche sind Halterungen vorgesehen, welche in die Rohrelemente eingehängt werden können und zur Aufnahme eines Deckels oder Verschlußringes vorgesehen sind, der um die Installationsleitungen herum angeordnet wird. Zum Verschließen der Durchbrüche sind aber wiederum mehrere Arbeitsvorgänge notwendig, wobei sich herausgestellt hat, daß die für die Durchbrüche bereitgestellten Hilfsmittel zum Verschließen des Durchbruches bei einzelnen Leitungen der Hausanschlüsse zwar brauchbar, aber bei mehreren nebeneinander angeordneten Leitungen aufgrund der unterschiedlichen Abstände zueinander und zu den Wandungen des Durchbruches nicht immer verwendbar sind, so daß letztlich eine Schalung angefertigt werden muß. Eine qualitative homogene Struktur wird aber dieser Vorgehensweise ebenfalls nicht erreicht.

Bei beiden Arbeitsverfahren treten zusätzliche Probleme in der Ausführung der nachfolgenden Gewerke auf, weil erst nach dem Verschließen der Durchbrüche die weiteren Arbeiten, wie beispielsweise Eßtrich- oder Putzarbeiten ausgeführt werden können.

Der Erfindung liegt die Aufgabe zugrunde, eine Vorrichtung zur Herstellung von Installationsdurchbrüchen zu schaffen, welche ein rationelles Arbeiten und eine preiswerte Herstellung von Durchbrüchen ermöglicht.

Erfindungsgemäß ist zur Lösung der Aufgabe in einer ersten Ausführungsvariante vorgesehen, daß mindestens zwei Grundkörper einander gegenüberliegend angeordnet sind und auf der nach innen weisenden Fläche jeweils mindestens einen, vorzugsweise mehrere, einstückig angeformte rohrförmige Stutzen aufweisen, welche jeweils paarweise gegenüberliegend angeordnet und durch jeweils ein Rohrelement miteinander verbunden sind.

In einer zweiten Ausführungsform der Erfindung ist vorgesehen, daß ein Grundkörper auf der nach innen weisenden Fläche jeweils mindestens einen, vorzugsweise mehrere, Rohrabschnitte aufweist, welche einstückig mit dem Grundkörper verbunden sind und daß ein weiterer Grundkörper korrespondierende rohrförmige Stutzen aufweist, welche mit den freien Enden der Rohrabschnitte des ersten Grundkörpers verbindbar sind.

In einer dritten besonderen Ausführungsvariante ist vorgesehen, daß ein Grundkörper auf der nach innen weisenden Fläche jeweils mindestens einen, vorzugsweise mehrere, Rohrabschnitte und Stutzen aufweist, welche einstückig mit dem Grundkörper verbunden und korrespondierend ausgebildet sind und daß die freien Enden der Rohrabschnitte und Stutzen zweier gegenüberliegender Grundkörper durch eine Drehung eines Grundkörpers in der senkrechten Ebene zu den Rohrabschnitten bzw. Stutzen miteinander verbindbar sind.

Die erste Ausführungsvariante der Erfindung besteht aus zwei einheitlichen Grundkörpern, welche durch Rohrelemente miteinander verbunden sind, wobei die Rohrelemente in ihrer Länge an die jeweilige Stärke des Betons angepaßt werden können, so daß die Grundelemente flächenbündig mit den Außenflächen des Betons abschließen. Ein wesentlicher Vorteil der Erfindung besteht darin, daß die einzelnen Rohrelemente bereits beim Gießen von der Betonmasse umgeben sind und somit ein nachträgliches Verschließen der Durchbrüche entfällt. Die Montage der Vorrichtungen wird in der Art vorgenommen, daß nach der Fertigung der Schalung die einzelnen Grundkörper auf der Schalung befestigt werden und anschließend zunächst die untere und obere Bewehrung verlegt werden kann. Nach Beendigung der Verlegearbeiten werden die Rohrelemente und die oberen Grundkörper als Abschluß aufgesteckt, welche nach der ersten Ausführungsvariante baugleich mit dem ersten unteren Grundkörper ausgeführt sind. Die beabstandeten Rohrelemente können hierbei durch die Bewehrung hindurch aufgesteckt, ohne das einzelne Stege der Bewehrung herausgeschnitten werden müssen, wodurch ebenfalls eine Arbeitsvereinfachung eintritt.

Bei der zweiten Ausführungsvariante sind zwei verschiedene Grundkörper vorhanden, wobei in der Regel der untere Grundkörper einen oder mehrere einstückig angeformte Rohrabschnitte aufweist, die eine an die entsprechenden Wand- bzw. Deckenstärken angepaßte Länge aufweisen und durch Aufstecken eines korrespondierenden Grundkörpers mit rohrförmigen Stutzen abgeschlossen werden. Der Vorteil der zweiten Ausführungsvariante liegt darin, daß auf die einzelnen Rohrelemente verzichtet werden kann, wobei aber das untere Grundelement in verschiedenen Ausführungen für die entsprechenden Stärken der Betondecken und -wände bereitgehalten werden muß.

Die dritte Ausführungsvariante zeichnet sich neben den bereits aufgeführten Vorteilen dadurch aus, daß nur ein Grundkörper mit einstückig angeformten und miteinander korrespondierenden Rohrabschnitten und Stutzen vorhanden ist und somit die Lagerhaltung und Herstellungskosten gesenkt werden können. Zwei gegenüberliegende Grundkörper können beispielsweise nach einer Drehung um 180 Grad in der senkrechten Ebene zu den Stutzen miteinander verbunden werden, wobei die Rohrabschnitte auf die Stutzen aufgeschoben werden. Es ist auch denkbar, daß mehrere Grundkörper auf diese Weise kombiniert und jeweils über einen Stutzen bzw. einen Rohrabschnitt miteinander verbunden werden.

In weiterer Ausgestaltung der Erfindung ist vorgesehen, daß die außenliegende Fläche des Grundkörpers jeweils einen mit den rohrförmigen Stutzen oder Rohrabschnitten fluchtenden Durchbruch aufweist, wobei der Durchbruch durch eine Abdeckung mit einer oder mehreren Sollbruchstellen ggfs. verschlossen sein kann. Die einzelnen Durchbrüche sind zur Aufnahme von Rohren oder von Versorgungsleitungen insbesondere von Kabeln vorgesehen, wobei entsprechend dem Bedarf an Durchbrüchen die Abdeckung durch einen Schraubenzieher oder ein anderes Werkzeug herausgetrennt werden kann.

Um die Montage der oberen Grundelemente zu vereinfachen, ist vorgesehen, daß die Rohrelemente bzw. Rohrabschnitte auf die Stutzen der Grundkörper ganz oder zumindest teilweise aufschiebbar bzw. aufsteckbar oder einschiebbar bzw. einsteckbar ausgebildet sind. Wahlweise besteht hierbei die Möglichkeit, daß die Stutzen und/oder Rohrabschnitte der Grundkörper und die Rohrelemente rund oder eckig ausgebildet sind.

Um die Durchführung der Bewehrung zwischen den einzelnen Bauelementen zu ermöglichen und ein Durchfließen des Betons mit einer ausreichenden Betonüberdeckung zu gewährleisten, ist vorgesehen, daß die Stutzen und/oder Rohrabschnitte der Grundkörper in zueinander äquidistanten Abständen angeordnet sind, wobei eine ein- oder mehrreihige Anordnung vorgesehen ist, so daß entsprechend dem Bedarf an einzelnen Durchbrüchen das Grundelement mit einer größeren Anzahl von rohrförmigen Stutzen versehen sein kann, welche ein- oder mehrreihig angeordnet sind. Bei der dritten Ausführungsvariante mit einer mehrreihigen Anordnung kann zusätzlich vorgesehen sein, daß die Stutzen und Rohrabschnitte bei einem Grundkörper jeweils alternierend angeordnet sind.

Um eine ausreichende Befestigung der Rohrelemente bzw. Rohrabschnitte auf den Stutzen der Grundkörpern zu ermöglichen ist ferner vorgesehen, daß die Stutzen und/oder Rohrabschnitte der Grundkörper zum freien Ende hin zumindestens teilweise konisch verjüngt oder radial nach innen oder außen abgesetzt sind. Alternativ besteht die Möglichkeit, daß die Stutzen und/oder Rohrabschnitte der Grundkörper und die Rohrelemente mit Rastmitteln und korrespondierenden Gegenrastmitteln ausgestattet sind.

In weiterer Ausgestaltung der Erfindung ist vorgesehen, daß die Länge der Stutzen des Grundkörpers 10 - 50% und die Länge der Rohrabschnitte 10 bis 70% der zu betonierenden Wand- bzw. Deckenstärke entspricht. Die Ausführung der Grundkörper mit den kürzeren Stutzen wird in der Regel für die herkömmliche Arbeitsmethode, d.h. Anfertigung der Schalung und nachträgliche Befestigung der Grundkörper bzw. Aufbringen der Bewehrung, verwendet.

Die zweite und dritte Ausführung der Grundkörper mit längeren rohrförmigen Stutzen bzw. Rohrabschnitten wird vorzugsweise bei Filigrandecken verwendet, welche industriell vorgefertigt werden, wobei der untere Grundkörper in die Filigrandecke bereits mit eingegossen wird. Nach Verlegung der Filigrandecken und der oberen Bewehrung auf der Baustelle brauchen die oberen Grundkörper nur noch aufgesteckt zu werden, wobei ggfs. einzelne zusätzliche Rohrelemente zur Verlängerung verwendet werden können. Es wird aber nicht ausgeschlossen, daß die zweite und dritte Ausführungsvariante bei der herkömmlichen Arbeitsmethode Verwendung findet.

In einer weiteren Ausgestaltung der Erfindung ist vorgesehen, daß die Stutzen und/oder Rohrabschnitte hervoroder zurückspringende Nocken bzw. Ringnuten oder Ringwulste aufweisen, welche in korrespondierende Nocken bzw. Ringnuten der Rohrelemente, Rohrabschnitte oder Stutzen der gegenüberliegenden Grundkörper einrasten. Durch diese Ausführungsform der Stutzen bzw. Rohrabschnitte besteht die Möglichkeit, daß ein Rohrelement für verschiedene Deckenstärken verwendet werden kann, wobei entsprechend der Deckenstärke das Rohrelement mehr oder weniger weit auf die Stutzen bzw. Rohrabschnitte rastend aufgeschoben wird.

Um das Aufstecken der Rohrelemente mit geringem Kraftaufwand zu ermöglichen ist in einer weiteren Ausführungsvariante vorgesehen, daß die Stutzen oder Rohrabschnitte mit längs verlaufenden Rippen auf der Außenfläche versehen sind. Eine Befestigung der Grundkörper auf der Schalung wird dadurch erleichtert, daß der Grundkörper mit einer oder mehreren Durchtrittsöffnungen, beispielsweise in Form von Bohrungen, für Befestigungselemente ausgestattet ist.

Um eine größere Anzahl von einzelnen Durchbrüchen zur Verfügung zu stellen ist vorgesehen, daß mehrere Grundkörper miteinander kombinierbar sind, wobei an den Kanten des Grundkörpers steckbare, insbesondere schwalbenschwanzförmige, Vor- und Rücksprünge oder korrespondierende Rastmittel vorhanden sind, um eine Befestigung untereinander zu ermöglichen.

In weiterer Ausgestaltung der Erfindung ist vorgesehen, daß der Grundkörper und/oder die Rohrelemente mit Versteifungen oder Verankerungen ausgestattet sind um einen sicheren Halt im ausgehärteten Beton zu ermöglichen. Um die Herstellungskosten der notwendigen Durchbrüche zu minimieren ist ferner vorgesehen, daß der Grundkörper und die Rohrelemente aus Kunststoff bestehen.

Zum Verschließen von nicht verwendeten Durchbrüchen der Grundkörper bzw. zum Abdichten von durchgeführten Verbindungsleitungen ist vorgesehen, daß die einzelnen Durchbrüche des Grundkörpers durch elastische Dichtungselemente verschließbar sind, wobei die Dichtungselemente aus vollflächig ausgebildet oder aus geschlitzten Ringelementen bestehen können. Die geschlitzten Ringelemente können beispielsweise nachträglich um die Kabel oder Versorgungsleitungen herumgelegt und in die Durchbrüche eingedrückt werden.

Die Erfindung wird im weiteren anhand der Figuren näher beschrieben.

Es zeigt
- Fig.1: einen Grundkörper in drei Ansichten mit mehreren rohrförmigen Stutzen,
- Fig.2: einen Schnitt der Verbindungslinie I-I gemäß Figur 1,
- Fig.3: eine geschnittene Darstellung einer in den Beton eingegossenen Vorrichtung bestehend aus zwei Grundkörpern und mehreren Rohrelementen und
- Fig.4: eine perspektivische Darstellung einer Vorrichtung gemäß der dritten Ausführungsvariante, bestehend aus vier Grundkörpern mit Stutzen und Rohrabschnitten.

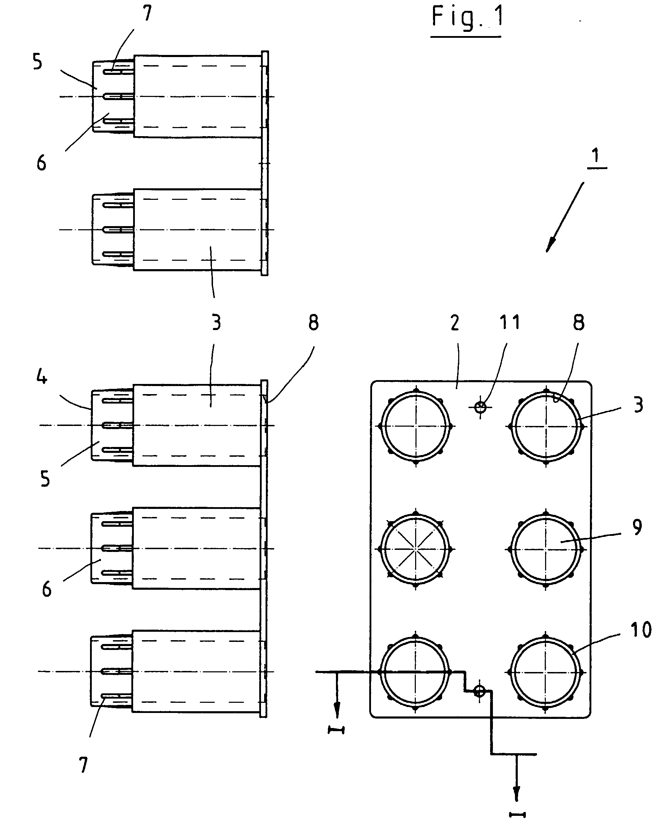

Figur 1 zeigt einen Grundkörper 1 in drei Ansichten, welcher aus einer rechteckförmigen Platte 2 besteht, wobei die Form der Platte 2 für die Erfindung unerheblich ist. Auf einer Seite der Platte 2 sind in zwei Reihen insgesamt sechs rohrförmige Stutzen 3 angeformt, welche einstückig mit der Platte 2 verbunden sind. Die Stutzen 3 sind in dem gezeigten Ausführungsbeispiel rund, es besteht jedoch auch die Möglichkeit rechteckförmige Stutzen zu verwenden. Die freien Enden 4 der Stutzen 3 sind zu axialen Mitte hin radial abgesetzt, so daß ein Ansatzstück 5 entsteht. Auf den Außenumfang 6 des Ansatzstückes 5 sind in Axialrichtung verlaufende Rippen 7 angeordnet, welche ein Aufstecken der nicht dargestellten Rohrelemente erleichtern und gleichzeitig durch ein Verklemmen einen sicheren Halt gewährleisten. Entsprechend der Zahl der Stutzen 3 weist der Grundkörper 1 fluchtende Durchbrüche 8 auf, welche durch eine Abdeckung 9 während der Montage verschlossen sind. Die Abdeckung 9 ist mit einer oder mehreren Sollbruchstellen mit der Platte 2 des Grundkörpers 1 verbunden. Desweiteren weist die Platte 2 zwei Bohrungen 11 auf, welche zur Befestigung des Grundkörpers 1 auf der Schalung vorgesehen sind.

Zum Aufstecken der nicht dargestellten Rohrelemente besteht alternativ die Möglichkeit, daß die Stutzen 3 zum freien Ende hin zumindestens teilweise konisch verjüngt sind oder aber auf der Innenseite oder Außenseite radial abgesetzt sind, so daß die Rohrelemente aufgesteckt oder eingesteckt werden können. Die axiale Länge der Stutzen 3 wird hierbei dem jeweiligen Verwendungszweck angepaßt.

Bei einer Verwendung des Grundkörpers 1 auf einer vorgefertigten Schalung werden vorzugsweise gleiche Grundkörper 1 gegenüberliegend angeordnet, wobei die einzelnen Stutzen 3 durch Rohrelemente miteinander verbunden werden, welche entsprechend ihrer Länge an die gewünschte Decken- bzw. Wandstärke angepaßt sind. Dem gegenüber wird bei einer Verwendung des Grundkörpers 1 für Filigrandecken eine längere Ausführungsform der Stutzen 3 bevorzugt, weil der Grundkörper 1 bereits in den vorgefertigten Beton eingegossen wird. Die Abstände der einzelnen Stutzen 3 sind hierbei so gewählt worden, daß die untere und obere Bewehrung der Betondecke bzw. Betonwand zwischen den Stutzen 3 hindurchgeführt werden kann.

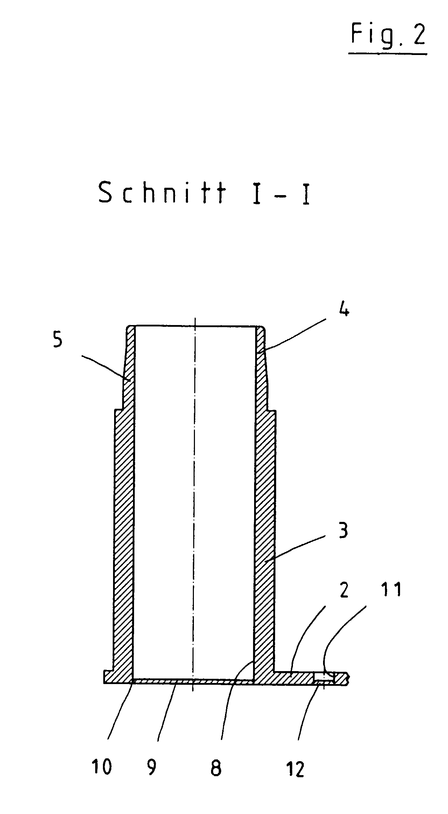

Figur 2 zeigt eine geschnittene Darstellung I-I gemäß der Verbindungslinie aus Figur 1. In der Schnittdarstellung ist ein einzelner Stutzen 3 dargestellt, welcher einstückig mit der Grundplatte 2 verbunden ist. Das freie Ende 4 des Stutzens 3 ist nach vorne hin zunächst radial abgesetzt und im weiteren konisch verjüngt ausgeführt, um ein schnelles und einfaches Aufstecken der Rohrelemente zu ermöglichen. Der Durchbruch 8 der Platte 2 ist durch eine Abdeckung 9 verschlossen, welche durch mehrere Sollbruchstellen 10 mit der Platte 2 während der Montage verbunden ist. Die Bohrungen 11 zur Befestigung des Grundkörpers 1 auf der Schalung sind ebenfalls durch eine Abdeckung 12 verschlossen, welche durch ein Befestigungsmittel bei der Montage ausgestoßen wird.

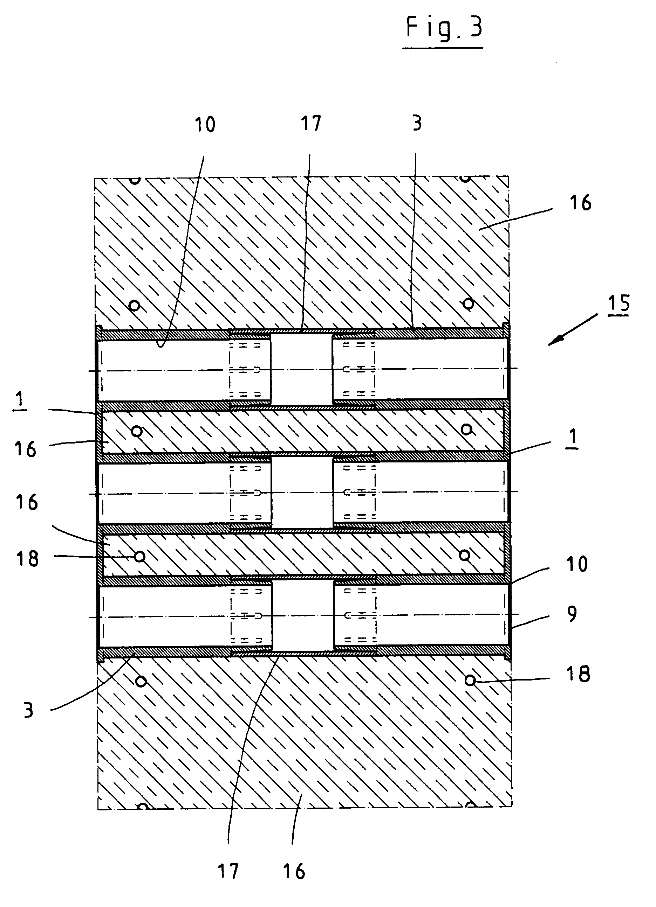

Figur 3 zeigt in einer geschnittenen Seitenansicht die gesamte Vorrichtung 15 nach der Montage und dem Vergießen mit der Betonmasse 16. Zwei Grundkörper 1 schließen jeweils flächenbündig mit dem ausgehärteten Beton ab und sind derart ausgerichtet, daß jeweils zwei Stutzen 3 gegenüberliegend angeordnet sind. Auf die Ansatzstücke 5 der Stutzen 3 sind Rohrelemente 17 aufgeschoben, welche entsprechend der Betonstärke ausgewählt wurden. Aus der geschnittenen Darstellung ist im weiteren sehr gut ersichtlich, daß die Betonmasse 16 zwischen die einzelnen Stutzen 3 bzw. Rohrelemente 17 gelaufen ist und somit zu einer homogenen Struktur des Betons mit einer ausreichenden Betonüberdeckung führt, wobei die Stutzen 3 bzw. Rohrelemente 17 allseits von der Betonmasse 16 umgeben sind. Desweiteren ist ersichtlich, daß die Bewehrung 18 zwischen den einzelnen Stutzen 3 hindurchgeführt worden ist und somit nicht zu einer Schwächung der tragenden Betondecke führt. Der wesentliche Vorteil der erfindungsgemäßen Vorrichtung 15 besteht darin, daß ein nachträgliches Verschließen der hergestellten Durchbrüche nicht notwendig ist. Durch die Stutzen 3 und die Rohrelemente 17 wird jeweils ein einzelner Durchbruch 19 durch die gesamte Dicke des Betons geschaffen, der zunächst durch die beiden gegenüberliegenden Abdeckungen 9 verschlossen ist. Die einzelnen Durchbrüche 19 können zur Durchführung von Installationsleitungen der Haustechnik durch Aufstoßen bzw. Durchstoßen der Abdeckungen 9 geöffnet werden und ermöglichen somit ein rationelles und einfaches Durchführen der Versorgungsleitungen, wobei eine Nachbearbeitung in Form von einem nachträglichen Verschließen des gesamten Durchbruches entfällt. Wahlweise besteht die Möglichkeit, daß nach Hindurchführung der Hausanschlüsse ein gummielastisches Element zur Abdichtung verwendet wird, welches ringförmig ausgeführt ist und mit einem Schlitz versehen ist, so daß ein Aufstecken auf die Verbindungsleitungen möglich ist.

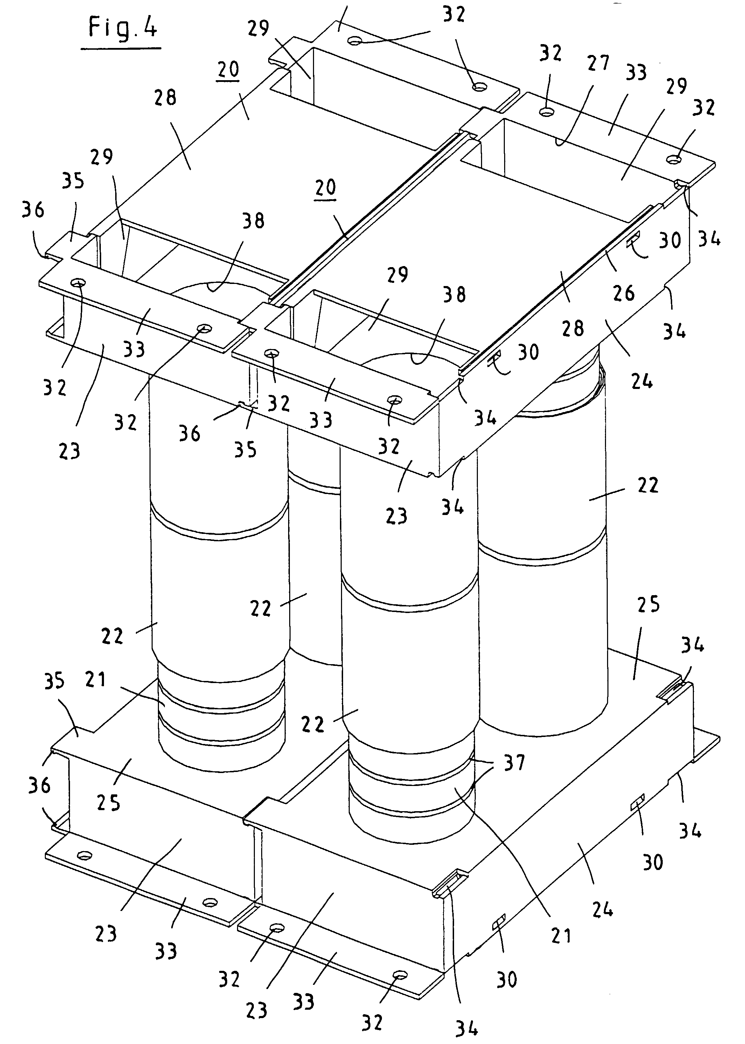

Figur 4 zeigt eine perspektivische Darstellung einer Vorrichtung 15 gemäß der dritten Ausführungsvariante, bestehend aus vier Grundkörpern 20 mit einstückig angeformten Stutzen 21 und Rohrabschnitten 22. Die Grundkörper 20 bestehen aus einem rechteckförmigen Kastenelement mit zwei kurzen und zwei langen Seitenflächen 23, 24 sowie einer nach innen gerichteten Fläche 25, an der jeweils ein mittig ausgerichteter Stutzen 21 und Rohrabschnitt 22 angeformt ist. Die hierzu parallel angeordnete nach außen gerichtete Fläche 26 weist eine rechteckige Ausnehmung 27 auf. Die Ausnehmung 27 ist durch eine herausnehmbare oder ggfs. verschwenkbare Abdeckung 28 teilweise verschlossen, die sich über cirka 2/3 der Länge des Grundkörpers 20 mittig angeordnet erstreckt, so daß an den Enden des Grundkörpers 20 jeweils eine Öffnung 29 bestehen bleibt. Die Abdeckung 28 ist an der einen Seitenfläche 24 mit zwei hervorstehenden Seitenkante in jeweils einer Ausnehmung 30 einrastend eingeklemmt, während an der gegenüberliegenden Seitenfläche 24 eine umgreifende Abrundung 31 der Abdeckung 28 in die entsprechenden Ausnehmungen 30 eingreift.

Zur Befestigung der Grundkörper 20 auf der Schalung sind jeweils vier Bohrungen 32 vorgesehen, die in einer einstückig angeformten Auskragungen 33 angeordnet sind, welche in Verlängerung der Fläche 26 an den Seitenflächen 23 ausgebildet sind. Zur Verbindung der Grundkörper 20 untereinander sind an einer Seitenfläche 24 jeweils vier paarweise angeordnete Ausnehmungen 33 vorhanden, die zur Aufnahme von jeweils an der gegenüberliegenden Seitenfläche 23 angeformten und paarweise angeordneten Verriegelungsstegen 34 mit einer vorderen Verdickung 35 vorgesehen sind und somit die Verbindung einer beliebigen Zahl von Grundkörpern nebeneinander ermöglicht.

In den Grundkörper 20 kann beispielsweise nach dem Öffnen der Abdeckung 28 eine isolierende Wärme- oder Schalldämmung, z. B. in Form von Mineralwolle, eingelegt werden, um die Dämmung zu erhöhen. Die Durchmesser der angeformten Stutzen 21 und die der gegenüberliegenden Rohrabschnitte 22 sind einander angepaßt, so daß nach einer Drehung von 180 Grad eines Grundkörpers 20, rechtwinklig zur Ebene der Stutzen 21 bzw. Rohrabschnitte 22, die jeweiligen Rohrabschnitte 22 auf die Stutzen 21 aufgeschoben werden können. Zum sicheren Halt der so miteinander verbundenen Grundkörper 20 weisen die Stutzen 21 außenliegende Ringnuten 36 auf, in die die innenliegenden Ringwulste der Rohrabschnitte 22 rastend eingreifen. Zur späteren Durchführung der Versorgungsleitungen weist die Fläche 25 deckungsgleiche Durchbrüche 37 mit den Stutzen 21 bzw. Rohrabschnitten 22 auf.

### Bezugszeichenliste

- 1: Grundkörper
- 2: Platte
- 3: Stutzen
- 4: Ende
- 5: Ansatzstück
- 6: Außenumfang
- 7: Rippe
- 8: Durchbruch
- 9: Abdeckung
- 10: Sollbruchstelle
- 11: Bohrung
- 12: Abdeckung
- 15: Vorrichtung
- 16: Betonmasse
- 17: Rohrelement
- 18: Bewehrung
- 19: Durchbruch
- 20: Grundkörper
- 21: Stutzen
- 22: Rohrabschnitt
- 23: Seitenfläche
- 24: Seitenfläche
- 25: Fläche
- 26: Fläche
- 27: Ausnehmung
- 28: Abdeckung
- 29: Öffnung
- 30: Ausnehmung
- 31: Abrundung
- 32: Bohrung
- 33: Auskragung
- 34: Ausnehmung
- 35: Verriegelungssteg
- 36: Verdickung
- 37: Ringnut
- 38: Durchbruch

## Patentansprüche

1. Vorrichtung (15) zur Herstellung von Installationsdurchbrüchen für Betondecken und/oder -wände zur Aufnahme von Versorgungsleitungen oder dergleichen, bestehend aus einem verlorenen Schalungselement, welches aus mindestens einem mit den außenliegenden Betonflächen bündig abschließenden Grundkörper (1) und hierzu senkrecht innerhalb des Betons angeordneten Rohrelementen (17) besteht,
dadurch gekennzeichnet,
daß mindestens zwei Grundkörper (1) einander gegenüberliegend angeordnet sind und auf der nach innen weisenden Fläche jeweils mindestens einen, vorzugsweise mehrere, einstückig angeformte rohrförmige Stutzen (3) aufweisen, welche jeweils paarweise gegenüberliegend angeordnet und durch jeweils ein Rohrelement (17) miteinander verbunden sind.

2. Vorrichtung (15) zur Herstellung von Installationsdurchbrüchen für Betondecken und/oder -wände zur Aufnahme von Versorgungsleitungen oder dergleichen, bestehend aus einem verlorenen Schalungselement, welches aus mindestens einem mit den außenliegenden Betonflächen bündig abschließenden Grundkörper (1) und hierzu senkrecht innerhalb des Betons angeordneten Rohrelementen besteht,
dadurch gekennzeichnet,
daß ein Grundkörper (1) auf der nach innen weisenden Fläche jeweils mindestens einen, vorzugsweise mehrere, Rohrabschnitte aufweist, welche einstückig mit dem Grundkörper (1) verbunden sind und daß ein weiterer Grundkörper (1) korrespondierende rohrförmige Stutzen (3) aufweist, welche mit den freien Enden der Rohrabschnitte des ersten Grundkörpers (1) verbindbar sind.

3. Vorrichtung (15) zur Herstellung von Installationsdurchbrüchen für Betondecken und/oder -wände zur Aufnahme von Versorgungsleitungen oder dergleichen, bestehend aus einem verlorenen Schalungselement, welches aus mindestens einem mit den außenliegenden Betonflächen bündig abschließenden Grundkörper (20) und hierzu senkrecht innerhalb des Betons angeordneten Rohrelementen besteht,
dadurch gekennzeichnet,
daß ein Grundkörper (20) auf der nach innen weisenden Fläche jeweils mindestens einen, vorzugsweise mehrere, Rohrabschnitte (22) und Stutzen (21) aufweist, welche einstückig mit dem Grundkörper (20) verbunden und korrespondierend ausgebildet sind und daß die freien Enden der Rohrabschnitte (22) und Stutzen (21) zweier gegenüberliegender Grundkörper (20) durch eine Drehung eines Grundkörpers (20) in der senkrechten Ebene zu den Rohrabschnitten (22) bzw. Stutzen (21) miteinander verbindbar sind.

4. Vorrichtung nach Anspruch 1, 2 oder 3,
dadurch gekennzeichnet,
daß die außenliegende Fläche des Grundkörpers (1, 20) jeweils einen mit den rohrförmigen Stutzen (3, 21) oder Rohrabschnitten (22) fluchtenden Durchbruch (8, 38) aufweist.

5. Vorrichtung nach Anspruch 4,
dadurch gekennzeichnet,
daß der Durchbruch (8, 38) durch eine Abdeckung (9) mit einer oder mehreren Sollbruchstellen (10) verschlossen ist.

6. Vorrichtung nach Anspruch 1, 2 oder 3,
dadurch gekennzeichnet,
daß die Rohrelemente (17) bzw. Rohrabschnitte (22) auf die Stutzen (3, 21) der Grundkörper (1, 20) ganz oder zumindest teilweise aufschiebbar bzw. aufsteckbar oder einschiebbar bzw. einsteckbar ausgebildet sind.

7. Vorrichtung nach einem oder mehreren der Ansprüche 1-6,
dadurch gekennzeichnet,
daß die Stutzen (3, 21) und/oder Rohrabschnitte (22) der Grundkörper (1, 20) und die Rohrelemente (17) rund oder eckig ausgebildet sind.

8. Vorrichtung nach einem oder mehreren der Ansprüche 1-7,
dadurch gekennzeichnet,
daß die Stutzen (3, 21) und/oder Rohrabschnitte (22) der Grundkörper (1, 20) in zueinander äquidistanten Abständen angeordnet sind, wobei eine ein- oder mehrreihige Anordnung vorgesehen ist.

9. Vorrichtung nach Anspruch 8,
dadurch gekennzeichnet,
daß die Stutzen (3, 21) und Rohrabschnitte (22) bei einem Grundkörper (1, 20) jeweils alternierend angeordnet sind.

10. Vorrichtung nach einem oder mehreren der Ansprüche 1-9,
dadurch gekennzeichnet,
daß die Stutzen (3, 21) und/oder Rohrabschnitte (22) der Grundkörper (1, 20) zum freien Ende hin zumindest teilweise konisch verjüngt oder radial nach innen oder außen abgesetzt sind.

11. Vorrichtung nach einem oder mehreren der Ansprüche 1-10,
dadurch gekennzeichnet,
daß die Stutzen (3, 21) und/oder Rohrabschnitte (22) des Grundkörpers (1, 20) und die Rohrelemente (17) mit Rastmitteln und korrespondierenden Gegenrastmitteln ausgestattet sind.

12. Vorrichtung nach Anspruch 10,
dadurch gekennzeichnet,
daß die Länge der Stutzen (3, 21) des Grundkörpers (1, 20) 10 bis 50% und die Länge der Rohrabschnitte (22) 10 bis 70% der zu betonierenden Wand- bzw. Deckenstärke entspricht.

13. Vorrichtung nach Anspruch 11,
dadurch gekennzeichnet,
daß die Stutzen (3, 21) und/oder Rohrabschnitte (22) hervor- oder zurückspringende Nocken bzw. Ringnuten (37) oder Ringwulste aufweisen, welche in korrespondierende Nocken bzw. Ringnuten der Rohrelemente (17), Rohrabschnitte (22) oder Stutzen (3, 21) der gegenüberliegenden Grundkörper (1, 20) einrasten.

14. Vorrichtung nach einem oder mehreren der Ansprüche 1-13,
dadurch gekennzeichnet,
daß die Stutzen (3, 21) und/oder Rohrabschnitte (22) mit längs verlaufenden Rippen (7) auf der Außenfläche versehen sind.

15. Vorrichtung nach einem oder mehreren der Ansprüche 1-14,
dadurch gekennzeichnet,
daß der Grundkörper (1, 20) mit einer oder mehreren Durchtrittsöffnungen, beispielsweise in Form von Bohrungen (32), für Befestigungselemente ausgestattet ist.

16. Vorrichtung nach einem oder mehreren der Ansprüche 1-15,
dadurch gekennzeichnet,
daß an den Kanten des Grundkörpers (1, 20) steckbare, insbesondere schwalbenschwanzförmige, Vor- und Rücksprünge oder korrespondierende Rastmittel (34, 35) vorhanden sind.

17. Vorrichtung nach einem oder mehreren der Ansprüche 1-16,
dadurch gekennzeichnet,
daß der Grundkörper (1, 20) und/oder die Rohrelemente (17), Rohrabschnitte (22) oder Stutzen (3, 221) mit Versteifungen oder Verankerungen ausgestattet sind.

18. Vorrichtung nach einem oder mehreren der Ansprüche 1-17,
dadurch gekennzeichnet,
daß der Grundkörper (1, 20) und die Rohrelemente (17) aus Kunststoff bestehen.

19. Vorrichtung nach einem oder mehreren der Ansprüche 1-18,
dadurch gekennzeichnet,
daß die einzelnen Durchbrüche (8, 38) des Grundkörpers (1, 20) durch elastische Dichtungselemente verschließbar sind, wobei die Dichtungselemente vollflächig ausgebildet oder aus geschlitzten Ringelementen bestehen.
